# EUROPÄISCHE PATENTANMELDUNG

(11) **EP 1 486 647 A2**
(43) Veröffentlichungstag der Anmeldung: **15.12.2004**
(21) Anmeldenummer: 04012989.2
(22) Anmeldetag: 02.06.2004
(51) Int. Cl.: F01N 3/22, F01N 3/08

(54) **Verfahren zur Regeneration eines NOx-Speicherkatalysators in einer Abgasanlage einer direkteinspritzenden Ottobrennkraftmaschine**

(30) Priorität: 13.06.2003 DE 10326592
(71) Anmelder: DaimlerChrysler AG, 70567 Stuttgart (DE)
(72) Erfinder: Busch, Michael-Rainer, 73061 Eberspach (DE); Geist, Armin, 70188 Stuttgart (DE); Schön, Christof, 73630 Remshalden (DE); Schütz, Berndt, 70327 Stuttgart (DE)

(57) **Zusammenfassung**

Bei einem Verfahren zur Regeneration eines NOₓ-Speicherkatalysators (9,10) in einer Abgasanlage (1) einer direkteinspritzenden Ottobrennkraftmaschine (2) wird in die Abgasanlage (1) unmittelbar vor dem NOₓ-Speicherkatalysator (9,10) ein Gas eingeblasen.

## Beschreibung

Die Erfindung betrifft ein Verfahren zur Regeneration eines NOₓ-Speicherkatalysators in einer Abgasanlage einer direkteinspritzenden Ottobrennkraftmaschine. Des weiteren betrifft die Erfindung eine Abgasanlage für eine direkteinspritzende Ottobrennkraftmaschine mit wenigstens einer Abgasleitung, in der wenigstens ein NOₓ-Speicherkatalysator angeordnet ist, und mit einer Luftpumpe.

Gattungsgemäße Verfahren und entsprechende Abgasanlagen für Brennkraftmaschinen sind aus dem allgemeinen Stand der Technik bekannt. Um die von Zeit zu Zeit erforderliche Schwefel-Regeneration des NOₓ-Speicherkatalysators zu erreichen, wird beispielsweise versucht, die in die Zylinder eingespritzte Kraftstoffmenge zu erhöhen, um in der Abgasanlage eine höhere Temperatur zu erreichen und so den in dem NOₓ-Speicherkatalysator meist in Form von Sulfaten angesammelten Schwefel zu entfernen. Aufgrund der großen Entfernung des NOₓ-Speicherkatalysators von der Brennkraftmaschine, die aus rein konstruktiven Gründen häufig nicht anders gewählt werden kann, herrscht dann allerdings in einem dem NOₓ-Speicherkatalysator vorgeschalteten Vorkatalysator meist eine derart hohe Temperatur, dass es zu Beschädigungen dieses Vorkatalysators kommen kann. Dies führt dazu, dass die Temperatur meist so gewählt wird, dass in dem NOₓ-Speicherkatalysator nur eine unvollständige Beseitigung des Schwefels erreicht werden kann.

In der DE 41 41 946 A1 und der DE 100 65 963 A1 sind Vorrichtungen und Verfahren zur Zufuhr von Sekundärluft zum Abgas einer Brennkraftmaschine beschrieben, welche zur beschleunigten Aufheizung eines Katalysators beitragen sollen. Diese in vielen Brennkraftmaschinen tatsächlich verwirklichte Sekundärlufteinblasung erfüllt zwar den Zweck des schnelleren Aufheizens des Katalysators, bei direkteinspritzenden Ottobrennkraftmaschinen kann sie jedoch zur Regeneration des NOₓ-Speicherkatalysators nichts beitragen, da die Sekundärlufteinblasung stromauf des vorgeschalteten Vorkatalysators erfolgt.

Es ist daher Aufgabe der vorliegenden Erfindung, ein Verfahren zur Regeneration eines NOₓ-Speicherkatalysators in einer Abgasanlage einer direkteinspritzenden Ottobrennkraftmaschine sowie eine entsprechende Abgasanlage für eine direkteinspritzende Ottobrennkraftmaschine zu schaffen, mit denen eine effektive Regeneration des NOₓ-Speicherkatalysators bei geringem konstruktivem Aufwand sichergestellt ist.

Erfindungsgemäß wird diese Aufgabe durch die in Anspruch 1 genannten Merkmale gelöst.

Durch das Einblasen eines Gases in die Abgasanlage unmittelbar vor dem NOₓ-Speicherkatalysator wird eine Reaktion mit dort vorhandenem HC und CO verursacht, was zu einer Aufheizung des NOₓ-Speicherkatalysators bzw. der in den NOₓ-Speicherkatalysator einströmenden Abgase führt. Auf diese Weise kann durch sehr einfache Maßnahmen zu den erforderlichen Zeitpunkten eine effektive Regeneration des NOₓ-Speicherkatalysators erreicht werden. Vorteilhafterweise wird dabei jegliche Belastung eines dem NOₓ-Speicherkatalysator gegebenenfalls vorgeschalteten Vorkatalysators vermieden.

Eine besonders starke Aufheizung und somit eine noch effektivere Regeneration des NOₓ-Speicherkatalysators ergibt sich, wenn in einer vorteilhaften Weiterbildung der Erfindung die Brennkraftmaschine zu denjenigen Zeitpunkten, in denen das Gas eingeblasen wird, mit einem fetten Kraftstoff-Luft-Gemisch betrieben wird, da durch den Einsatz eines solchen Gemischs ein größerer Anteil an HC und CO im Abgas entsteht.

Eine Abgasanlage für eine direkteinspritzende Ottobrennkraftmaschine ergibt sich aus den Merkmalen des Anspruches 4.

Durch die dabei vorgesehene Luftleitung kann mit Hilfe der Luftpumpe in einfacher Weise die Luft bzw. allgemein das Gas unmittelbar vor dem NOₓ-Speicherkatalysator in die Abgasanlage eingeleitet werden, was einen gemessen an der Effektivität äußerst geringen konstruktiven Aufwand erfordert.

Weitere vorteilhafte Ausgestaltungen und Weiterbildungen der Erfindung ergeben sich aus den restlichen Unteransprüchen sowie aus dem nachfolgend anhand der Zeichnung prinzipmäßig dargestellten Ausführungsbeispiel.

Dabei zeigen:
- Fig. 1: eine Abgasanlage für eine Brennkraftmaschine zur Durchführung des erfindungsgemäßen Verfahrens;
- Fig. 2: einen Zylinder einer Ventileinrichtung für die erfindungsgemäße Abgasanlage;
- Fig. 3: einen Kolben der Ventileinrichtung für die erfindungsgemäße Abgasanlage;
- Fig. 4: die aus dem Zylinder von Fig. 2 und dem Kolben von Fig. 3 bestehende Ventileinrichtung in einer ersten Stellung;
- Fig. 5: die Ventileinrichtung aus Fig. 4 in einer zweiten Stellung;
- Fig. 6: die Ventileinrichtung aus Fig. 4 in einer dritten Stellung; und
- Fig. 7: die Ventileinrichtung aus Fig. 4 in einer vierten Stellung.

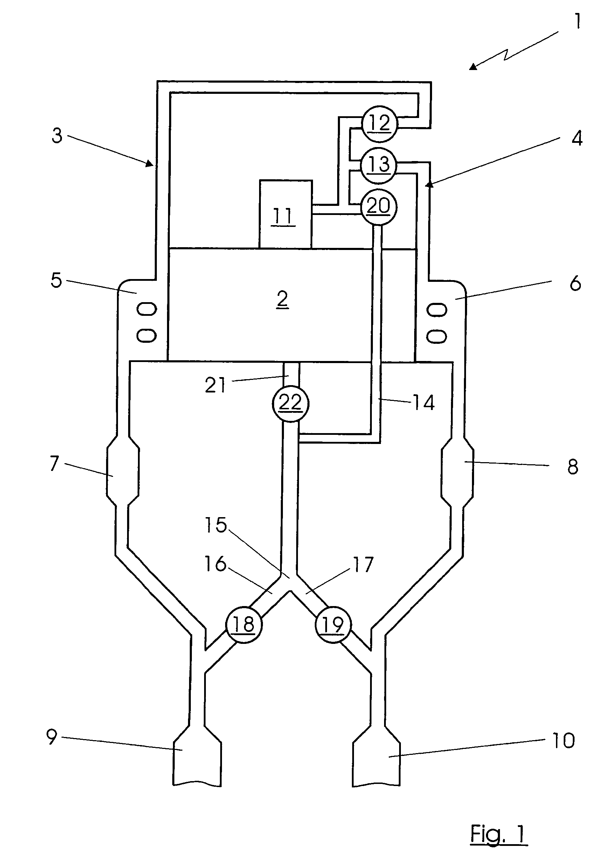

Fig. 1 zeigt in schematischer Ansicht eine Abgasanlage 1 für eine direkteinspritzende, nach dem Otto-Prinzip arbeitende Brennkraftmaschine 2. Die Abgasanlage 1 weist zwei Abgasfluten 3 und 4 auf, wie dies beispielsweise bei Brennkraftmaschine 2 in V-Bauweise der Fall ist.

Die Verbindung der Abgasfluten 3 und 4 mit der Brennkraftmaschine 2 erfolgt in an sich bekannter Weise über jeweilige Abgaskrümmer 5 und 6. In beiden Abgasfluten 3 und 4 ist jeweils ein Vorkatalysator 7 und 8 sowie ein diesem nachgeschalteter NOₓ-Speicherkatalysator 9 und 10 angeordnet, dessen Wirkungsweise an sich bekannt ist und daher im folgenden nicht näher erläutert werden soll.

Des weiteren ist eine Luftpumpe 11 vorgesehen, welche im vorliegenden Fall an der Brennkraftmaschine 2 angeflanscht ist und von derselben angetrieben wird. Selbstverständlich könnte die Luftpumpe 11 jedoch auch mit einer eigenständigen Antriebseinrichtung versehen sein. Die Luftpumpe 11 ist unter anderem dafür vorgesehen, in die beiden Abgasfluten 3 und 4 Luft bzw. allgemein ein Gas einzublasen, um mittels einer sogenannten Sekundärlufteinblasung die Vorkatalysatoren 7 und 8 insbesondere im Kaltstart der Brennkraftmaschine 2 schnell auf ihre Betriebstemperatur zu bringen. Um diese Sekundärlufteinblasung steuern zu können, sind in den beiden Abgasfluten 3 und 4 jeweilige Sekundärluftventile 12 und 13 vorgesehen, die lediglich in ihrer Offenstellung die Einblasung von Luft stromauf der Vorkatalysatoren 7 und 8 in die jeweilige Abgasflut 3 oder 4 ermöglichen.

Von der Luftpumpe 11 geht des weiteren eine Luftleitung 14 aus, die sich an einem Verzweigungspunkt 15 in zwei Teilleitungen 16 und 17 aufteilt, von denen jede zu einer der Abgasfluten 3 und 4 führt und in einen Bereich unmittelbar vor den NOₓ-Speicherkatalysatoren 9 und 10 mündet. In jeder der Teilleitungen 16 und 17 ist ein Ventil 18 und 19 angeordnet, welches lediglich in seinem geöffneten Zustand eine Anströmung des jeweiligen NOₓ-Speicherkatalysators 9 oder 10 mit der durch die Luftpumpe 11 in die Luftleitung 14 geförderten Luft ermöglicht. Hierbei sollte sichergestellt werden, dass lediglich eines der beiden Ventile 18 oder 19 geöffnet ist, um während des Betriebs der Brennkraftmaschine 2 ein Überströmen von einer Abgasflut 3 in die andere Abgasflut 4 bzw. umgekehrt zu verhindern. Unmittelbar nach der Luftpumpe 11 ist in der Luftleitung 14 ein Luftventil 20 vorgesehen, welches zum Verschließen der Luftleitung 14 dient. Statt Luft kann allgemein auch ein geeignetes Gas in die Luftleitung 14 eingeleitet werden.

Durch diese Einleitung von Luft bzw. einem geeigneten Gas mittels der Luftpumpe 11 über die Luftleitung 14 und eine der Teilleitungen 16, 17 in den jeweiligen NOₓ-Speicherkatalysator 9 oder 10 findet aufgrund der Reaktion mit dem sich in diesem Bereich befindlichen HC und CO eine Aufheizung des NOₓ-Speicherkatalysators 9, der Abgase bzw. der Luft statt. Zur Anreicherung der Abgas mit HC und CO wird die Brennkraftmaschine 2 vorzugsweise mit einem fetten Luft-Kraftstoffgemisch betrieben. Mit erfolgter Aufheizung kann die Schwefel-Regeneration der NOₓ-Speicherkatalysatoren 9 bzw. 10 ablaufen, wozu vorzugsweise die Brennkraftmaschine 2 weiterhin mit einem fetten Luft-Kraftstoffgemisch betrieben wird und die über die Luftpumpe 11 zugeführte Luftmenge so eingestellt wird, dass sich einerseits ein reduzierendes Abgas am Eintritt des zu regenerierenden NOₓ-Speicherkatalysators 9 bzw. 10 ergibt und andererseits eine entsprechend hohe Temperatur erhalten bleibt.

Die Abgasanlage 1 ist des weiteren mit einer an sich bekannten Abgasrückführung versehen, welche zumindest teilweise von der Luftleitung 14 Gebrauch macht. So kann im Abgasrückführbetrieb das rückgeführte Abgas von den Abgaskrümmern 5 und 6 über die jeweilige Abgasflut 3 und 4, die Vorkatalysatoren 7 und 8, die Teilleitungen 16 und 17 mit den Ventilen 18 und 19, die Luftleitung 14 und eine von der Luftleitung 14 abzweigende Abgasrückführleitung 21 mit einem darin angeordneten Abgasrückführventil 22 der Brennkraftmaschine 2 rückgeführt werden. Das Abgasrückführventil 22 ist hierzu am Übergang der Luftleitung 14 in die Abgasrückführleitung 21 angeordnet. Wenn sich das Abgasrückführventil 22 in seiner geschlossenen Stellung befindet, ist keine Abgasrückführung möglich.

Die dargestellte Abgasanlage 1 mit den unterschiedlichen Merkmalen ermöglicht somit verschiedene Funktionen:

Die Einblasung von von der Luftpumpe 11 gelieferten Luft über die Sekundärluftventile 12 und 13 in die Vorkatalysatoren 7 und 8 beim Kaltstart der Brennkraftmaschine 2. Hierbei ist das Luftventil 20 geschlossen.

Eine Abgasrückführung im warmen Zustand der Brennkraftmaschine 2 über die Abgaskrümmer 5 und 6, die Vorkatalysatoren 7 und 8, die Teilleitungen 16 und 17, die Luftleitung 14 sowie die Abgasrückführleitung 21. Dabei sind die Sekundärluftventile 12 und 13 sowie das Luftventil 20 geschlossen.

Die Regenerierung der NOₓ-Speicherkatalysatoren 9 und 10 im warmen Zustand der Brennkraftmaschine 2, wobei die Luftpumpe 11 durch das offene Luftventil 20 und durch eines der Ventile 18 oder 19 über die Luftleitung 14 und eine der Teilleitungen 16 oder 17 Luft in einen der NOₓ-Speicherkatalysatoren 9 oder 10 einbläst. Um sicherzustellen, dass die Luftmenge ausreichend ist, wird im vorliegenden Fall nur jeweils in einen der beiden NOₓ-Speicherkatalysatoren 9 oder 10 Luft eingeblasen.

Die im vorliegenden Fall dargestellte Abgasanlage 1 ist für eine Brennkraftmaschine 2 in V-Bauweise ausgelegt. Wenn die Brennkraftmaschine 2 in Reihenbauweise ausgeführt ist, so weist sie normalerweise lediglich eine der beiden Abgasfluten 3 oder 4 auf und dementsprechend auch nur einen der beiden NOₓ-Speicherkatalysatoren 9 oder 10. In diesem Fall kann selbstverständlich auch eines der beiden Ventile 18 oder 19 oder sogar beide Ventile 18 und 19 entfallen, wenn deren Funktion durch das Luftventil 20 übernommen wird.

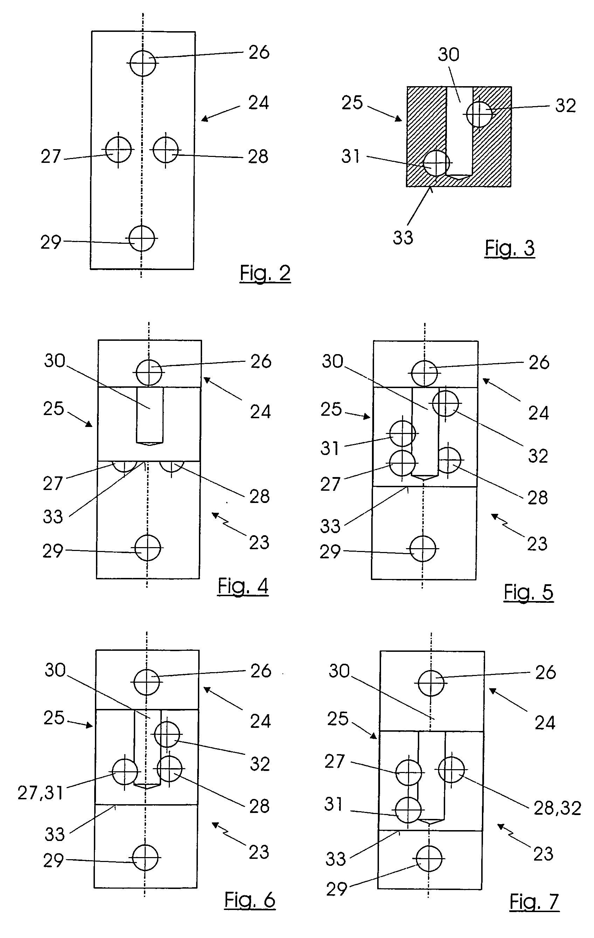

In den Figuren 2 bis 7 ist eine Ventileinrichtung dargestellt, welche die Funktionen der Ventile 18 und 19, des Abgasrückführventils 22 und gegebenenfalls auch die Funktion des Luftventils 20 übernehmen kann. Diese in ihrer Gesamtheit mit dem Bezugszeichen 23 bezeichnete Ventileinrichtung weist einen in Fig. 2 separat dargestellten Zylinder 24 und einen in Fig. 3 separat dargestellten Kolben 25 auf und kann beispielsweise im Bereich des Übergangs der Luftleitung 14 in die Abgasrückführleitung 21 oder auch an dem Verzweigungspunkt 15 angeordnet sein.

Der Zylinder 24 ist mit insgesamt vier Bohrungen 26, 27, 28 und 29 versehen, welche sich allesamt in der Mantelfläche desselben befinden. Hiervon ist die Bohrung 26 mit der Luftleitung 14, die Bohrung 27 mit der Teilleitung 16 und somit mit der Abgasflut 3, die Bohrung 28 mit der Teilleitung 17 und somit mit der Abgasflut 4 und die Bohrung 29 mit der Abgasrückführleitung 21 verbunden. Die jeweiligen Verbindungen der Bohrungen 26, 27, 28 und 29 mit den einzelnen Leitungen 14, 16, 17 und 21 sind in den Figuren nicht dargestellt.

Demgegenüber weist der Kolben 25 eine in Achsrichtung desselben verlaufende Verbindungsbohrung 30 sowie zwei die Verbindungsbohrung 30 anschneidende Verbindungsbohrungen 31 und 32 auf. Durch lineare Verschiebung des Kolbens 25 in axialer Richtung innerhalb des Zylinders 24 können eine untere Steuerkante 33 sowie die beiden Verbindungsbohrungen 31 oder 32 mit unterschiedlichen Ausgangsbohrungen 26, 27, 28 oder 29 in Überschneidung gebracht werden, wodurch ein entsprechender Gasstrom ermöglicht werden kann, was in den Figuren 4, 5, 6 und 7 im einzelnen dargestellt ist.

In der in Fig. 4 dargestellten Position des Kolbens 25 ist die Bohrung 26, die zu der Luftleitung 14 führt, durch den Kolben 25 verschlossen bzw. von den anderen Bohrungen 27, 28 und 29 abgetrennt. Allerdings gibt die Steuerkante 33 des Kolbens 25 die beiden mit den Abgasfluten 3 und 4 verbundenen Bohrungen 27 und 28 sowie die Bohrung 29 zu der Abgasrückführleitung 21 frei, sodass in dieser Stellung eine Abgasrückführung von den Abgasfluten 3 und 4 in die Abgasrückführleitung 21 und somit in die Brennkraftmaschine 2 durchgeführt werden kann. Eine Abgasströmung in Richtung der Brennkraftmaschine 2 findet statt, weil im Saugrohr der Brennkraftmaschine 2 ein geringerer Druck herrscht als in den beiden Abgasfluten 3 und 4. Im vorliegenden Fall sind die Bohrungen 27 und 28 nur teilweise abgedeckt, sodass erkennbar ist, dass durch axiale Verstellung des Kolbens 25 auch eine Mengenregelung der Abgasrückführung möglich ist. In dieser Stellung ersetzt die Ventileinrichtung 23 also das Abgasrückführventil 22.

In der Stellung des Kolbens 25 gemäß Fig. 5 sind sämtliche Bohrungen 26, 27, 28, 29 geschlossen bzw. durch die Steuerkante 33 voneinander abgetrennt, so dass keine Gasströmung vorhanden ist. Wenn in diesem Zustand die Dichtheit des Kolbens 25 gegenüber dem Zylinder 24 sowie die Dichtheit sämtlicher Bohrungen gewährleistet ist, so kann durch die Ventileinrichtung 23 das Luftventil 20 ersetzt werden.

In der Stellung des Kolbens 25 gemäß Fig. 6 ist die Verbindungsbohrung 31 des Kolbens 25 mit der Bohrung 27 des Zylinders 24 in Überdeckung, so dass die über die Bohrung 26 von der Luftleitung 14 in die Ventileinrichtung 23 einströmende Luft über die beiden Verbindungsbohrungen 30 und 31 in die Bohrung 27 und somit in die Abgasflut 3 gelangen und eine Einblasung von Gas in den NOₓ-Speicherkatalysator 9 durchgeführt werden kann.

In der Stellung des Kolbens 25 gemäß Fig. 7 ist die Verbindungsbohrung 32 des Kolbens 25 mit der Bohrung 28 des Zylinders 24 in Überdeckung, so dass die über die Bohrung 26 von der Luftleitung 14 in die Ventileinrichtung 23 einströmende Luft über die beiden Verbindungsbohrungen 30 und 32 in die Bohrung 28 und somit in die Abgasflut 4 gelangen und eine Einblasung von Gas in den NOₓ-Speicherkatalysator 10 durchgeführt werden kann.

## Patentansprüche

1. Verfahren zur Regeneration eines NOₓ-Speicherkatalysators in einer Abgasanlage einer direkteinspritzenden Ottobrennkraftmaschine,
**dadurch gekennzeichnet,**
**dass** in die Abgasanlage (1) unmittelbar vor dem NOₓ-Speicherkatalysator (9,10) ein Gas eingeblasen wird.

2. Verfahren nach Anspruch 1,
**dadurch gekennzeichnet,**
**dass** die Brennkraftmaschine (2) zu denjenigen Zeitpunkten, in denen das Gas eingeblasen wird, mit einem fetten Kraftstoff-Luft-Gemisch betrieben wird.

3. Verfahren nach Anspruch 1 oder 2,
**dadurch gekennzeichnet,**
**dass** als Gas Luft verwendet wird.

4. Abgasanlage für eine direkteinspritzende Ottobrennkraftmaschine mit wenigstens einer Abgasflut, in der wenigstens ein NOₓ-Speicherkatalysator angeordnet ist, und mit einer Luftpumpe,
**dadurch gekennzeichnet,**
**dass** von der Luftpumpe (11) eine Luftleitung (14) ausgeht, welche unmittelbar vor dem NOₓ-Speicherkatalysator (9;10) in die wenigstens eine Abgasflut (3,4) mündet.

5. Abgasanlage nach Anspruch 4,
**dadurch gekennzeichnet,**
**dass** in der Luftleitung (14) ein Luftventil (20) angeordnet ist, welches in der Lage ist, die zu dem NOₓ-Speicherkatalysator (9,10) führende Luftleitung (14) zu sperren.

6. Abgasanlage nach Anspruch 4 oder 5,
**dadurch gekennzeichnet,**
**dass** eine zu der Brennkraftmaschine (2) führende Abgasrückführleitung (21) vorgesehen ist, welche mit der zu dem NOₓ-Speicherkatalysator (9,10) führenden Luftleitung (14) identische Leitungsabschnitte aufweist.

7. Abgasanlage nach einem der Ansprüche 4, 5 oder 6 für eine Brennkraftmaschine mit mehreren Abgasfluten, wobei in jeder Abgasflut ein NOₓ-Speicherkatalysator angeordnet ist,
**dadurch gekennzeichnet,**
**dass** von der Luftleitung (14) zu beiden NOₓ-Speicherkatalysatoren (9,10) jeweilige Teilleitungen (16,17) führen, wobei jeweilige Ventile (18,19) zum Sperren der beiden Teilleitungen (16,17) vorgesehen sind.

8. Abgasanlage nach Anspruch 7,
**dadurch gekennzeichnet,**
**dass** die in den Teilleitungen (16,17) angeordneten Ventile (18,19), das Luftventil (20) sowie ein Abgasrückführventil (22) in einer gemeinsamen Ventileinrichtung (23) zusammengefasst sind.

9. Abgasanlage nach Anspruch 8,
**dadurch gekennzeichnet,**
**dass** die Ventileinrichtung (23) einen Zylinder (24) aufweist, dessen Mantelfläche mehrere Bohrungen (26,27,28,29) aufweist, welche mit der Luftleitung (14), mit den beiden Teilleitungen (16,17) und mit der Abgasrückführleitung (21) verbunden sind, wobei in dem Zylinder (24) ein Kolben (25) angeordnet ist, welcher mehrere Verbindungsbohrungen (30,31,32) aufweist und innerhalb des Zylinders (24) eine lineare Bewegung ausführt, um die Verbindungsbohrungen (30,31,32) des Kolbens (25) mit unterschiedlichen der Bohrungen (26,27,28,29) des Zylinders (24) in Überdeckung zu bringen.

10. Abgasanlage nach Anspruch 9,
**dadurch gekennzeichnet,**
**dass** zur linearen Bewegung des Kolbens (25) ein Linearmotor vorgesehen ist.
